# EUROPEAN PATENT APPLICATION

(11) **EP 1 875 954 A1**
(43) Date of publication of application: **09.01.2008**
(21) Application number: 06731736.2
(22) Date of filing: 06.04.2006
(51) Int. Cl.: B01D 53/86, B01D 53/94, B01J 23/63, B01J 23/652, B01J 23/72, B01J 23/745, G11C 7/00

(54) **CATALYST FOR CATALYTICALLY REDUCING NITROGEN OXIDE, CATALYST STRUCTURE, AND METHOD OF CATALYTICALLY REDUCING NITROGEN OXIDE**

(30) Priority: 11.04.2005 JP 2005113087
(71) Applicant: VALTION TEKNILLINEN TUTKIMUSKESKUS, 02044 VTT Espoo (FI); HONDA MOTOR CO., LTD., Tokyo 107-8556 (JP)
(72) Inventor: NAKATSUJI, Tadao, Kashiba-shi, Nara 6390223 (JP); SUZUKI, Norio, c/o K.K. Honda Gijutsu Kenkyusho, Wako-shi, Saitama 3510193 (JP); OHNO, Hiroshi, c/o K.K. Honda Gijutsu Kenkyusho, Wako-shi, Saitama 3510193 (JP); SATO, Naohiro, c/o K.K. Honda Gijutsu Kenkyusho, Wako-shi, Saitama 3510193 (JP)
(74) Representative: Bates, Philip Ian
(86) International application number: PCT/JP2006/307800
(87) International publication number: WO 2006/109849

(57) **Abstract**

The invention provides a catalyst and a catalyst structure for catalytic reduction of nitrogen oxides contained in exhaust gas wherein fuel is supplied and subjected to combustion under periodic rich/lean conditions and the resulting exhaust gases are brought into contact therewith, which catalyst comprises:
an outer catalyst layer comprising an outer catalyst component A which comprises at least one selected from a solid acid, and a solid acid supporting oxides and/or ions of at least one element selected from vanadium, tungsten, molybdenum, copper, iron, cobalt, nickel and manganese, and
an inner catalyst layer comprising an inner catalyst component which comprises at least one noble metal catalyst component B selected from platinum, rhodium, palladium and an oxide thereof and a catalyst component C comprising ceria or praseodymium oxide or a mixture of oxides and/or a composite oxide of at least two elements selected from cerium, zirconium, praseodymium, neodymium, terbium, samarium, gadolinium and lanthanum. The invention further provides a method for catalytic reduction of nitrogen oxides by contacting the nitrogen oxides with the catalyst.

## Description

### TECHNICAL FIELD

The invention relates to catalytic reduction of nitrogen oxides (which mainly comprise NO and NO₂, and will be referred to as NOx hereunder), that is, the invention relates to a catalyst for reduction of NOx and a method for catalytic reduction of NOx contained in exhaust gas using such a catalyst. More particularly, the invention relates to a catalyst for reduction of NOx contained in exhaust gas wherein fuel is supplied to a combustion chamber of a diesel engine or a gasoline engine and subjected to combustion with periodic rich/lean excursions and the resulting exhaust gas is brought into contact with the catalyst. The invention also relates to a method for catalytic reduction of nitrogen oxides contained in exhaust gas using such a catalyst. The catalyst and method of the invention are suitable for reducing and removing harmful nitrogen oxides contained in exhaust gas, e.g., from engines of automobiles.

In particular, the invention relates to a catalyst and a method for catalytic reduction of NOx contained in exhaust gas in the presence of sulfur oxides (which mainly comprises SO₂ and SO₃, and will be referred to SOx hereunder) with no deterioration of catalyst wherein fuel is supplied and subjected to combustion with periodic rich/lean excursions whereby NOx is generated in the exhaust gases.

In the invention, by the term "excursion" is meant a movement or such operations of air/fuel ratio outward and back from a mean value thereof along a time axis. By the term "rich" is meant an air/fuel ratio smaller than the stoichiometric air/fuel ratio of the fuel in question, while by the term "lean" is meant an air/fuel ratio larger than the stoichiometric air/fuel ratio of the fuel in question. For normal automobile gasoline, the stoichiometric air/fuel ratio is approximately 14.5. Further, the term "catalyst" includes a catalyst itself as well as a catalyst structure which contains the catalyst and works to remove NOx during rich/lean combustion of fuel.

Accordingly, by the term "supplying fuel with periodic rich/lean excursions" is especially meant that fuel is supplied, injected or jetted to a combustion chamber of a diesel engine or a gasoline engine, and is subjected to combustion mainly under the lean conditions (wherein the oxygen concentration in the exhaust gas after combustion of fuel is typically in a range of approximately 5% to 10%) while air/fuel ratio is so adjusted that the combustion atmosphere of fuel is periodically oscillated between the rich conditions and lean conditions. Therefore, "the rich/lean excursions" has the same meaning as "the rich/lean conditions".

### BACKGROUND ART

NOx contained in exhaust gas has conventionally been removed by, for example, a method in which the NOx is oxidized and then absorbed in an alkaline solution or a method in which the NOx is reduced to nitrogen by using a reducing agent such as ammonia, hydrogen, carbon monoxide or hydrocarbons. However, these conventional methods have their own disadvantages.

That is, the former method requires a means for handling the resulting alkaline waste liquid to prevent environmental pollution. The latter method, for example, when it uses ammonia as a reducing agent, involves a problem that ammonia reacts with SOx in the exhaust gases to form salts, resulting in deterioration in catalytic activity at low temperatures. Accordingly, when NOx from moving sources such as automobiles is to be treated, the safety is a question.

On the other hand, when hydrogen, carbon monoxide or hydrocarbons are used as a reducing agent, the reducing agent reacts preferentially with oxygen since the waste gas contains oxygen in a higher concentration than NOx. This means that substantial reduction of NOx needs a large quantity of a reducing agent, and hence resulting in remarkable fall of fuel efficiency.

It has been therefore proposed to catalytically decompose NOx in the absence of a reducing agent. However, the catalysts that have been conventionally known for direct decomposition of NOx have not yet been put to practical use due to their low decomposition activity. On the other hand, a variety of zeolites have been proposed as a catalyst for catalytic reduction of NOx using a hydrocarbon or an oxygen-containing organic compound as a reducing agent. In particular, Cu-ion exchanged ZSM-5 or H-type (hydrogen type or acid type) zeolite ZSM-5 (SiO₂/Al₂O₃ molar ratio=30 to 40) has been regarded as optimal. However, it has been found that even the H-type zeolite has no sufficient reduction activity, and particularly the zeolite catalyst is rapidly deactivated on account of dealumination of the zeolite structure when water is contained in the exhaust gas.

Under these circumstances, it has been necessary to develop a more active catalyst for catalytic reduction of NOx. Accordingly, a catalyst composed of an inorganic oxide carrier material having silver or silver oxide supported thereon has recently been proposed, as described in EP-A1-526099 or EP-A1-679427. However, it has been found that the catalyst has a high activity for oxidation, but a low activity for selective reduction of NOx, so that the catalyst has a low conversion rate of nitrogen oxides to nitrogen. In addition, the catalyst involves a problem that it is deactivated rapidly in the presence of sulfur oxides. The catalyst catalyzes the selective reduction of NOx with hydrocarbons under full lean conditions, but it has a lower NOx conversion and a more narrow temperature window (temperature range) than the known three way catalyst. This makes it difficult for such lean NOx catalysts to be practically used. Thus, there has been a demand for developing a more heat-resistant and more active catalyst or catalytic system for the catalytic reduction of nitrogen oxides.

In order to overcome the above-mentioned problems, a NOx storage-reduction system has recently been proposed as one of the most promising methods, as described in WO 93/7363 or WO 93/8383. In the proposed system, fuel is periodically spiked for a short moment to a combustion chamber in excess of the stoichiometric amount. Vehicles with lean burn engines can be driven at lower fuel consumption rates than conventional vehicles. It is because such vehicles can be driven at a much lower fuel/air ratio than the conventional vehicles. This NOx storage-reduction system for lean burn engines reduces NOx in two periodic steps at intervals of one to two minutes.

That is, in the first step, NO is oxidized to NO₂ on a platinum or rhodium catalyst under (normal) lean conditions, and the NO₂ is absorbed in an absorbent comprising such an alkali compound as potassium carbonate or barium carbonate. Subsequently, rich conditions are formed for the second step, and the rich conditions are maintained for several seconds. Under the rich conditions, the absorbed (or stored) NO₂ is desorbed from the absorbent and is efficiently reduced to nitrogen with hydrocarbons, carbon monoxide or hydrogen on the platinum or rhodium catalyst. This NOx storage-reduction system works well over a long period of time in the absence of SOx. However, there is a problem that in the presence of SOx, the catalytic system deteriorates drastically due to the irreversible absorption of SOx at NO₂ absorption sites on the alkali compound under either the lean or the rich conditions.

Accordingly, for the purpose of betraying the weak point or solving the problem in that the NOx storage-reduction system deteriorates in performance in the presence of SOx, there has been recently proposed in WO 02/8997 such a catalyst that has a purification ability close to the NOx storage-reduction system and a high SOx durability.

The catalyst comprises
(A) an outer catalyst layer comprising an outer catalyst component, wherein the outer catalyst component comprises
   (a) ceria or;
   (b) praseodymium oxide or;
   (c) at least one selected from the group consisting of a mixture of oxides of at least two elements and a composite oxide of at least two elements, the elements being selected from the group consisting of cerium, zirconium, praseodymium, neodymium, gadolinium and lanthanum; and
(B) an inner catalyst layer comprising an inner catalyst component, wherein the inner catalyst component comprises
   (d) at least one selected from the group consisting of platinum, rhodium, palladium and oxides thereof; and
   (e) a carrier.

Further, there has been proposed in WO 02/22255 such a catalyst that has a high SOx durability, which comprises an outer catalyst layer comprising a first catalyst component selected from rhodium, palladium and oxides thereof and a second catalyst component selected from zirconia, cerium oxide, praseodymium oxide, neodymium oxide and mixtures thereof, and an inner catalyst layer comprising a third catalyst component selected from rhodium, palladium, platinum and oxides thereof.

### DISCLOSURE OF THE INVENTION

It is an object of the invention to provide a catalyst for reduction of NOx contained in exhaust gas wherein fuel is supplied and subjected to combustion with a periodic rich/lean excursions, whereby NOx is generated in the exhaust gas, with high durability in a wide temperature range even in the presence of oxygen, sulfur oxides or water, as well as a method for catalytic reduction of NOx contained in exhaust gas using such a catalyst.

In particular, it is an object of the invention to provide a highly durable catalyst for catalytic reduction of NOx in the lean excursion of periodic rich/lean combustion of fuel at a broad temperature range with no deterioration in the presence of oxygen, sulfur oxides or water, especially in the presence of sulfur oxides which brings about serious problem to the NOx storage catalyst, and no generation of harmful ammonia in the rich excursion. It is also an object of the invention to provide a method for catalytic reduction of nitrogen oxides contained in exhaust gas using such a catalyst.

It is a further object of the invention to provide a catalyst structure for catalytic reduction of NOx which comprises the catalyst supported on an inactive substrate.

The invention provides a catalyst for catalytic reduction of nitrogen oxides contained in exhaust gas wherein fuel is supplied and subjected to combustion under periodic rich/lean conditions and the resulting exhaust gas is brought into contact therewith, which catalyst comprises:
(A) an outer catalyst layer comprising an outer catalyst component A which comprises at least one selected from
   (a) a solid acid, and
   (b) a solid acid supporting oxides and/or ions of at least one element selected from vanadium, tungsten, molybdenum, copper, iron, cobalt, nickel and manganese, and
      an inner catalyst layer comprising an inner catalyst component which comprises
(B) at least one noble metal catalyst component B selected from platinum, rhodium, palladium and an oxide thereof, and
(C) a catalyst component C comprising
   (c) ceria or
   (d) praseodymium oxide or
   (e) a mixture of oxides and/or a composite oxide of at least two elements selected from cerium, zirconium, praseodymium, neodymium, terbium, samarium, gadolinium and lanthanum.

The invention also provides a catalyst structure for catalytic reduction of nitrogen oxides contained in exhaust gas wherein fuel is supplied and subjected to combustion under periodic rich/lean conditions. The catalyst structure comprises an inactive substrate and the above-mentioned catalyst supported thereon.

Further, the invention provides a method for catalytic reduction of nitrogen oxides contained in exhaust gas wherein fuel is supplied and subjected to combustion under periodic rich/lean conditions and the resulting exhaust gas is brought into contact a catalyst, which catalyst comprises:
(A) an outer catalyst layer comprising an outer catalyst component A which comprises at least one selected from
   (a) a solid acid, and
   (b) a solid acid supporting oxides and/or ions of at least one element selected from vanadium, tungsten, molybdenum, copper, iron, cobalt, nickel and manganese, and
      an inner catalyst layer comprising an inner catalyst component which comprises
(B) at least one noble metal catalyst component B selected from platinum, rhodium, palladium and an oxide thereof, and
(C) a catalyst component C comprising
   (c) ceria or
   (d) praseodymium oxide or
   (e) a mixture of oxides and/or a composite oxide of at least two elements selected from cerium, zirconium, praseodymium, neodymium, terbium, samarium, gadolinium and lanthanum.

According to preferred embodiments of the invention, the inner catalyst component comprises the catalyst component B supported on the catalyst component C either in the catalyst or in the method of the invention mentioned above. According to other preferred embodiments of the invention, the inner catalyst component comprises the catalyst component B supported on the catalyst component C and a carrier either in the catalyst or in the method of the invention mentioned above.

### BRIEF DESCRIPTION OF THE DRAWINGS

Fig. 1 is a graph showing changes of the concentration of nitrogen in a nitrogen oxides containing gas with time (rich/lean time) when the gas is treated with an example of the catalysts of the invention at a reaction temperature in the range of 250 to 400°C; and
Fig. 2 is a graph showing changes of the concentration of nitrogen in a nitrogen oxides containing gas with time (rich/lean time) when the gas is treated with an example of the catalysts of comparative examples at a reaction temperature in the range of 250 to 400°C.

### BEST MODE FOR CARRYING OUT THE INVENTION

Herein the invention, the catalytic reduction of nitrogen oxides means that NOx adsorbed on a catalyst under the lean conditions is converted to ammonia by catalytic reaction under the rich conditions, and this ammonia is stored on a solid acid in the catalyst, and then the ammonia stored in this way reacts with NOx in the presence of oxygen under the lean conditions, thereby NOx is converted to nitrogen, water, carbon monoxide and carbon dioxide among others in high efficiency over the entire lean/rich excursions.

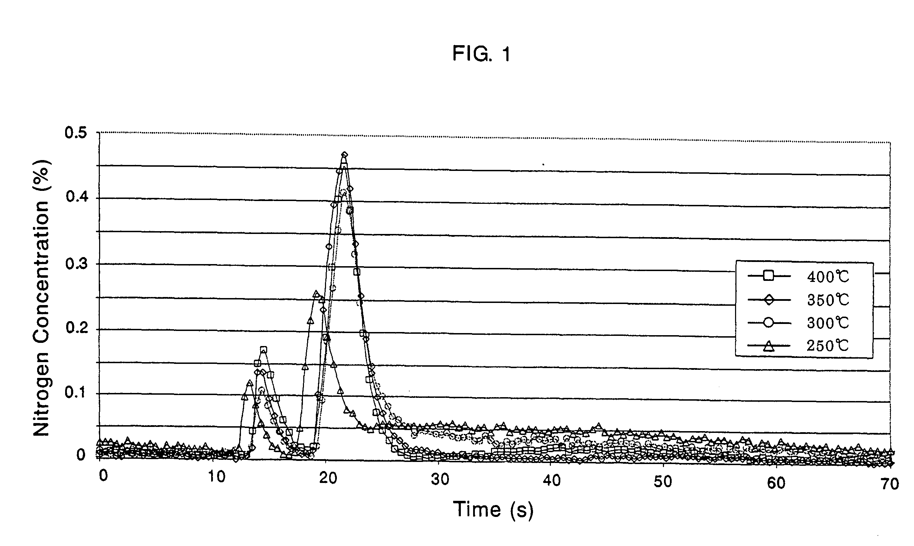

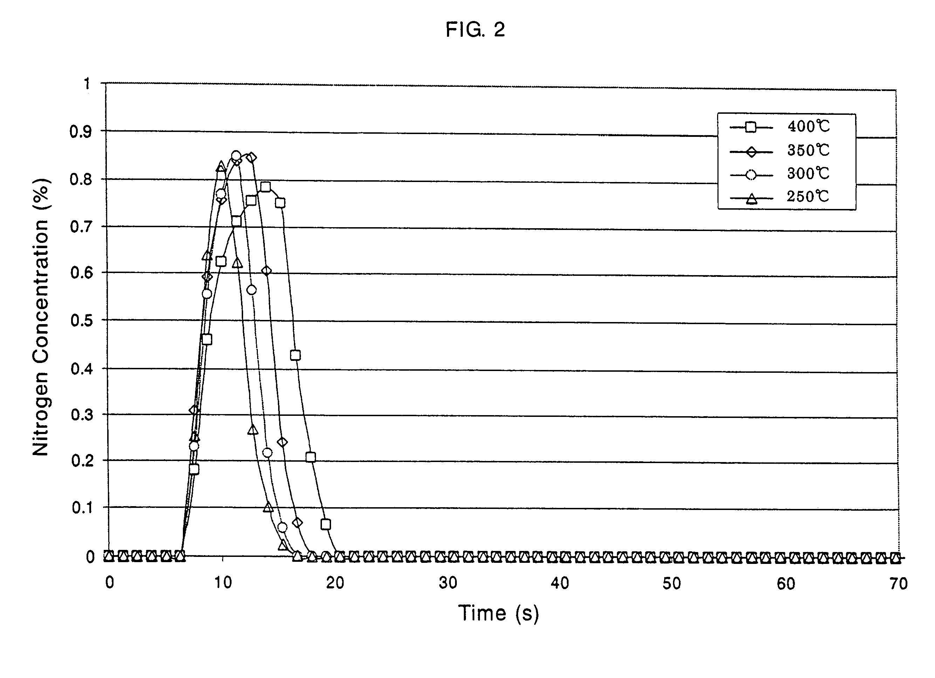

In the NOx storage-reduction system described in WO 93/7363 and WO 93/8383 mentioned hereinbefore, NOx is absorbed on a basic material such as an alkaline compound and the thus absorbed NOx is reduced with a reducing agent such as hydrogen, carbon monoxide or hydrocarbon under the rich conditions to generate nitrogen, and consequently, the generation of nitrogen is observed only under the rich conditions, as shown in FIG. 2. In contrast, in the method of the invention, nitrogen is generated only under the lean condition, as shown in FIG. 1. This is because ammonia generated on the catalyst under the rich conditions is adsorbed on a solid acid catalyst component in the catalyst, and the ammonia adsorbed on the solid acid catalyst component in this way reduces NOx selectively to nitrogen only under the lean conditions. Therefore, when the catalyst of the invention is used under the lean/rich excursions, NOx is purified by a reaction that is different in mechanism from the previously described NOx storage-reduction system in which nitrogen is generated only under the rich conditions.

The reaction of selective reduction of NOx with ammonia in the presence of oxygen is shown by the equation below:

NO + NH₃ + (1/4) O₂ → N₂ + (3/2) H₂O

Accordingly, if 50% of NOx present in exhaust gas is converted to ammonia, all the NOx in the exhaust gas is converted to nitrogen.

The catalyst for catalytic reduction of nitrogen oxides contained in exhaust gas is used where fuel is supplied and subjected to combustion under periodic rich/lean conditions and the resulting exhaust gas is brought into contact therewith.

The catalyst comprises:
(A) an outer catalyst layer comprising an outer catalyst component A which comprises at least one selected from
   (a) a solid acid, and
   (b) a solid acid supporting oxides and/or ions of at least one element selected from vanadium, tungsten, molybdenum, copper, iron, cobalt, nickel and manganese, and
      an inner catalyst layer comprising an inner catalyst component which comprises
(B) at least one noble metal catalyst component B selected from platinum, rhodium, palladium and an oxide thereof, and
(C) a catalyst component C comprising
   (c) ceria or
   (d) praseodymium oxide or
   (e) a mixture of oxides and/or a composite oxide of at least two elements selected from cerium, zirconium, praseodymium, neodymium, terbium, samarium, gadolinium and lanthanum.

In the invention, the catalyst component C is often referred to as an oxygen storing material by noting that it has a function capable of storing oxygen (OSC function).

The catalyst of the invention is a two layer catalyst that has an outer catalyst layer and an inner catalyst layer wherein the outer catalyst layer is exposed so as to contact directly with exhaust gas. By way of examples, the catalyst of the invention is used in the form of a catalyst structure in which the outer catalyst layer and the inner catalyst layer are supported in this order on an inactive substrate formed of clay or metal.

As the catalyst component C is mentioned as the component (e) as one of the embodiments, it may be a mixture of oxides of at least two of the elements and/or a composite oxide (solid solution) of at least two of the elements, that is, it may be at least one selected from the group consisting of a mixture of oxides of at least two of the elements and a composite oxide (solid solution) of at least two of the elements, and it is preferred that the mixture is a uniform mixture. However, a composite oxide of at least two of the elements is more preferably used than a mixture of oxide of at least two of the elements. In particular, a binary or ternary composite oxide is preferred.

In the case of a binary composite oxide, for example, ceria/praseodymium oxide composite oxide, ceria/zirconia composite oxide, ceria/terbium oxide composite oxide or ceria/samarium oxide composite oxide, the weight ratio in terms of oxides of the elements in the composite oxide is preferably in the range of 80/20 to 60/40. In turn, in the case of a ternary composite oxide, for example, ceria/gadolinium oxide/zirconia composite oxide, ceria/neodymium oxide/zirconia composite oxide, ceria/zirconia/praseodymium oxide composite oxide, ceria/zirconia/lanthanum oxide composite oxide, ceria/zirconia/samarium oxide composite oxide, or ceria/zirconia/terbium oxide composite oxide, the weight ratio in terms of oxides of the elements in the composite oxide is preferably in the range of 45/30/30 to 75/20/5. The weight ratio in terms of oxides in the composite oxides is calculated provided that ceria, zirconia, terbium oxides, praseodymium oxide, gadolinium oxides, neodymium oxide, samarium oxides and lanthanum oxides are represented by CeO₂, ZrO₂ TbO₂, Pr₆O₁₁, Ga₂O₃, Nd₂O₃, Sm₂O₃ and La₂O₃, respectively.

The catalyst component C in the catalyst of the invention can be prepared by a following method, for example. At first, a water soluble salt of an element constituting the catalyst component, such as a nitrate, is neutralized or heated and hydrolyzed, to form a hydroxide, and the hydroxide is calcined at a temperature of 300-900°C in an oxidative or a reductive atmosphere. However, the catalyst component C may be obtained by calcining a hydroxide or an oxide of the element available in the market.

As the solid acid of the catalyst component A, there is used acid type zeolite such as H-Y zeolite, H-mordenite, H-β zeolite, H-ZSM-5 or H-SUZ-4, or titania, zirconia or silica-alumina is used. Among these solid acids, H-mordenite is most preferred from the viewpoint of ammonia adsorption ability. The acid solid supporting a metallic oxide is a catalyst component in which the solid acid as mentioned above supports at least one oxide of a metal selected from the group consisting of vanadium, tungsten, molybdenum, copper, iron, cobalt, nickel and manganese. The metallic oxide supported on the solid acid is suitably selected depending upon the reaction temperature at which exhaust gas is treated. When the reaction temperature is in the range of 200-300 °C, oxides of vanadium or copper are preferably used, while when the reaction temperature is not less than 300°C, oxides of tungsten, molybdenum, iron, cobalt, nickel or manganese are preferably used. The use of a mixture of solid acid catalyst components supporting various kinds of metallic oxides provides a catalyst effective in a wider temperature range. The catalyst component comprising the solid acid supporting metallic oxides can be prepared by any of the hitherto known methods for supporting metallic oxides such as an impregnation method, an ion exchange method or a kneading method.

The amount of metallic oxide supported on a solid acid is in the range of 0.1-10 % by weight based on the total weight of the solid acid and the metallic oxide. When the amount of metallic oxide supported on a solid acid is less than 0.1 % by weight, the selective reduction of NOx with ammonia under the lean conditions takes place insufficiently, and when the amount of metallic oxide supported on solid acid is more than 10 % by weight, reoxidation of ammonia takes place so that the resulting NOx conversion falls.

As mentioned above, the catalyst of the invention is a two layer catalyst composed of the outer catalyst layer and the inner catalyst layer. The outer catalyst component of the outer catalyst layer comprises the catalyst component A while the inner catalyst component of the inner catalyst layer comprises combination of the catalyst component B and the catalyst component C. The weight ratio of the outer catalyst component to the inner catalyst component is preferably in the range of 1-10. The weight ratio has large influence on reduction ability of the catalyst in the rich/lean process. Although more preferred value of the weight ratio depends on reaction conditions such as temperature, oxygen concentration or space velocity (SV) among others, it is in the range of 3 to 7.5, and it is usually about 5 so that the catalyst has high NOx reduction ability in the rich/lean process. If the weight ratio is made to be less than 1, the performance of the resulting catalyst does not improve accordingly, but diffusion of NOx and a reducing agent into the inner catalyst layer is hindered and the performance of the catalyst rather falls. On the other hand, when the weight ratio is made to be more than 10, NOx adsorption under the lean conditions and ammonia generation under the rich conditions fall, so that selective reduction of NOx with ammonia under the lean conditions takes place insufficiently, thereby NOx purification ability of the catalyst falls.

The inner catalyst component of the inner catalyst layer comprises the aforesaid catalyst components B and C. According to a preferred embodiment, the catalyst component B, that is, the noble metal catalyst component, is supported on the catalyst component C, and according to another preferred embodiment, the catalyst component B is supported on the catalyst component C and a carrier. Any conventional carrier such as alumina, silica, silica-alumina, zeolite or titania may be used as the carrier. When the noble metal catalyst component is supported on the catalyst component C and a carrier, the carrier is also included in the inner catalyst component. According to the invention, it is preferred that the noble metal catalyst component B is contained in an amount of 0.5-5 % by weight based on the inner catalyst component. The carrier is contained in an amount of 5-50 % by weight based on the inner catalyst component.

As mentioned above, the catalyst component C has an OSC function. Accordingly, when the OSC function is strong and when gas atmosphere is converted from lean to rich, response delay arises, and as results, the yield of ammonia falls. According to the invention, however, the above-mentioned response delay can be prevented by replacing a part of catalyst component C supporting the noble metal catalyst component B in the inner catalyst layer by a carrier that has no OSC function.

According to the invention, the two layer catalyst composed of the outer catalyst layer and the inner catalyst layer in this way is used as a catalyst structure comprised of an inactive substrate and the inner catalyst layer and the outer catalyst layer layered in this order on the substrate.

In the two layer catalyst of the invention, the noble metal catalyst component B in the inner catalyst layer is contained in the range of 0.5-5 % by weight in terms of metals based on the inner catalyst components. Even if the proportion of the noble metal catalyst component is more than 5 % by weight in terms of metals based on the inner catalyst component, no improvement in the generation efficiency of ammonia under the rich conditions is obtained, and in some cases, conversely, oxidation of ammonia adsorbed on the solid acid under the lean conditions is promoted to lower the selectivity of selective reduction of NOx with ammonia under the lean conditions. On the other hand, when the proportion of the noble metal catalyst component is less than 0.5 % by weight in terms of metals based on the inner catalyst components, the generation efficiency of ammonia with a reducing agent falls.

When a part of the noble metal catalyst component is supported on the catalyst component C and the rest on the carrier, it is preferred that the noble metal catalyst component is supported on the carrier by ion exchanging since the dispersibility thereof can be raised in the case the carrier used has ion exchanging ability. However, in this case also, when the ions are supported on the carrier at a proportion more than one percent, the noble metal element is in many cases supported as a mixture of ions and oxides because of limited ion exchange ability of the carrier.

The inner catalyst component is obtained as powder comprised of the catalyst component C and the carrier supporting the noble metal catalyst component thereon preferably by a method as follows. First, the noble metal catalyst component is supported on the catalyst component C and a carrier such as alumina by a method such as an impregnation or an ion exchange method, and then the resulting product is calcined at a temperature of 500-900°C in an oxidative or a reductive atmosphere. Of course, if necessary, the inner catalyst component may be obtained as powder by preparing a product comprised of the catalyst component C supporting the noble metal catalyst component and a product comprised of a carrier such as alumina supporting the noble metal catalyst component, and then by mixing the products together.

The catalyst component C mainly serves to adsorb NOx thereon contained in exhaust gas under the lean conditions. The catalyst component C has both NO adsorption sites and NO₂ adsorption sites. In general, NO₂ adsorption sites are more in number, although the numbers of the sites depend on the kind of the oxides used. The catalyst component B containing the noble metal catalyst component not only serves to reduce NOx adsorbed on the catalyst component C with high efficiency in this way under the rich excursion, but also oxidizes NO thereby to raise the NOx adsorption rate under the lean conditions. Among the various noble metal catalyst components, platinum is most preferred from the standpoint of ammonia generation efficiency and NO oxidation ability. However, when a catalyst is to have good performance at low temperature, rhodium or palladium that is superior in ammonia generation efficiency at low temperature is preferred. A combination of platinum and at least one of rhodium and palladium is also preferred.

As mentioned hereinbefore, the catalyst components used in the catalyst of the invention can be obtained in various shapes such as powder or particles. Accordingly, the catalyst components can be molded to any shape such as honeycomb, annular or spherical shapes by any of hitherto well known methods. If desired, any additives, such as molding additives, reinforcements, inorganic fibers or organic binders may be used when the catalyst structure is prepared.

The catalyst of the invention may advantageously be used as a catalyst structure that is composed of an inactive substrate of any desired shape having a catalyst layer thereon prepared by a wash-coating method, for example, by coating the catalyst component on the surface of the substrate. The inactive substrate may be composed of, for example, a clay mineral such as cordierite or a metal such as stainless steel, preferably of heat-resistant, such as a Fe-Cr-Al steel, and may be in the form of honeycomb, annular or spherical structures.

The catalyst components for the outer and the inner catalyst layers are obtained in various shapes such as powder or particles, as mentioned above. Thus, an inner catalyst layer is first formed by molding the inner catalyst component to any desired shape such as honeycomb, annular or spherical structures, and then forming an outer catalyst layer on the inner catalyst layer, thereby obtaining catalyst structures in various shapes. If desired, any additives, such as molding additives, reinforcements, inorganic fibers or organic binders may be used when the catalyst structure is prepared.

The catalyst of the invention is excellent in resistance to sulfur oxides as well as resistance to heat. Therefore, it is suitable for use as, for example, a catalyst for the reduction of nitrogen oxides or for the denitrization of exhaust gas from diesel engines or exhaust gas from lean gasoline automobile engines.

The catalyst of the invention is used preferably in a catalytic reaction in which the combustion atmosphere of fuel is oscillated between the rich conditions and the lean conditions as mentioned hereinbefore. The period of the catalytic reaction (i.e., the interval between the rich atmosphere (or the lean atmosphere) and the subsequent rich atmosphere (or the lean atmosphere) is preferably 5-150 seconds and more preferably 30-90 seconds. Further, according to the invention, the rich time is preferably in the range of 0.1-10 seconds, and the lean time is preferably in the range of 5-150 seconds, and the rich/lean span, that is, the time under the rich conditions (seconds)/the time under the lean conditions (seconds) is usually in the range of 0.2-0.01.

The rich conditions are normally prepared by periodically injecting fuel into a combustion chamber of an engine at an air/fuel weight ratio of 10-14 in the case of using gasoline as fuel. A typical exhaust gas under the rich conditions contain several hundred volume ppm of NOx, 5-6% by volume of water, 2-3% by volume of carbon monoxide, 2-3% by volume of hydrogen, several thousands volume ppm of hydrocarbons and 0-0.5% by volume of oxygen.

In turn, the lean conditions are normally prepared by periodically injecting fuel into a combustion chamber of an engine at an air/fuel weight ratio of 20-40 in case of using gasoline as fuel. A typical exhaust gas under the lean conditions contain several hundred volume ppm of NOx, 5-6% by volume of water, several thousands volume ppm of carbon monoxide, several thousands volume ppm of hydrogen, several thousand volume ppm of hydrocarbons and 5-10% by volume of oxygen.

The temperature at which the catalytic reduction of NOx is carried out using the catalyst of the invention is usually in the range of 150-550°C, preferably in the range of 200-500°C, so that the catalyst has an effective catalyst activity for the reduction of NOx over a long period of time in the rich excursion, although it depends on the exhaust gas to be reacted. Within the above recited temperature range of the reaction, the exhaust gas is treated preferably at a space velocity of 5,000-150,000 h⁻¹.

According to the invention, NOx containing exhaust gas is brought into contact with the catalyst described above in the periodic rich/lean excursions so that the NOx is catalytically reduced in a stable and efficient manner even in the presence of oxygen, sulfur oxides or moisture.

### INDUSTRIAL AVAILABILITY OF THE INVENTION

The catalyst and the use of the same according to the invention makes it possible to catalytically reduce NOx contained in exhaust gas with high durability at wide temperature range with no deterioration even in the presence of oxygen, sulfur oxides or water. In particular, the catalyst and the use of the same makes it possible to catalytically reduce NOx contained in exhaust gas with high durability at wide temperature range even in the presence of oxygen, sulfur oxides or water with neither deterioration nor generation of harmful ammonia under the rich conditions which have been serious problems involved in the known NOx storage-reduction system.

### EXAMPLES

The invention is now illustrated in greater detail with reference to examples of preparation of powder catalysts for use as catalyst components and examples of preparation of honeycomb catalyst structures using the above-mentioned powder catalyst, as well as examples of catalytic activity of the thus prepared catalyst structures; however, it should be understood that the invention is not limited thereto. All the parts and percentages are hereinafter on the basis of weight unless otherwise specified.

### (1) Preparation of Catalyst Component C

### Preparation Example 1

151.37 g of cerium nitrate (Ce(NO₃)₃·6H₂O) was dissolved in 1000 ml of ion-exchanged water to prepare an aqueous solution. 0.1-N ammonia water was added to the aqueous solution to neutralize and hydrolyze the cerium ions, and the resulting slurry was aged for one hour. The product was separated from the slurry by filtering, dried at a temperature of 120°C for 24 hours, and then calcined in the air at a temperature of 500°C for three hours to obtain ceria powder (having a specific surface area of 138 m²/g).

### Preparation Example 2

164.31 g of cerium nitrate (Ce(NO₃)₃·6H₂O) and 4.47 g of praseodymium nitrate (Pr(NO₃)₃·6H₂O) were dissolved in 1000 ml of ion-exchanged water to prepare an aqueous solution. 0.1-N ammonia water was added to the aqueous solution to neutralize and hydrolyze the cerium salt and praseodymium salt, and the resulting slurry was aged for one hour. The resulting product was separated from the slurry by filtering, dried at a temperature of 120°C for 24 hours, and then calcined in the air at a temperature of 500°C for three hours to obtain ceria/praseodymium oxide composite oxide powder (having an oxide weight ratio of 95/5 and a specific surface area of 182 m²/g).

### Preparation Example 3

164.31 g of cerium nitrate (Ce(NO₃)₃·6H₂O), 2.24 g of praseodymium nitrate (Pr(NO₃)₃·6H₂O) and 3.98 g of lanthanum nitrate (La(NO₃)₃·6H₂O) were dissolved in 1000 ml of ion-exchanged water to prepare an aqueous solution. 0.1-N ammonia water was added to the aqueous solution to neutralize and hydrolyze the cerium salt, praseodymium salt and lanthanum salt, and the resulting slurry was aged for one hour. The resulting product was separated from the slurry by filtering, dried at a temperature of 120°C for 24 hours, and then calcined in the air at a temperature of 500°C for three hours to obtain ceria/praseodymium oxide/lanthanum oxide composite oxide powder (having an oxide weight ratio of 95/2.5/2.5 and a specific surface area of 180 m²/g).

### Preparation Example 4

121.06 g of cerium nitrate (Ce(NO₃)₃·6H₂O), 28.12 g of zirconium oxynitrate (ZrO(NO3)₂) and 7.48 g of gadolinium nitrate (Gd(NO₃)₃·6H2O) were dissolved in 1000 ml of ion-exchanged water to prepare an aqueous solution. 0.1-N ammonia water was added to the aqueous solution to neutralize and hydrolyze the cerium salt, oxyzirconium salt and gadolinium salt, and the resulting slurry was aged for one hour. The resulting product was separated from the slurry by filtering, dried at a temperature of 120°C for 24 hours, and then calcined in the air at a temperature of 500°C for three hours to obtain ceria/zirconia/gadolinium oxide composite oxide powder (having an oxide weight ratio of 72/24/4 and a specific surface area of 198 m²/g).

### Preparation Example 5

109.43 g of cerium nitrate (Ce(NO₃)₃·6H₂O), 31.27 g of zirconium oxynitrate (ZrO(NO₃)₂) and 15.63 g of neodymium nitrate (Nd(NO₃)₃·6H₂O) were dissolved in 1000 ml of ion-exchanged water to prepare an aqueous solution. 0.1-N ammonia water was added to the aqueous solution to neutralize and hydrolyze the cerium salt, oxyzirconium salt and neodymium salt, and the resulting slurry was aged for one hour. The resulting product was separated from the slurry by filtering, dried at a temperature of 120°C for 24 hours, and then calcined in the air at a temperature of 500°C for three hours to obtain ceria/zirconia/neodymium oxide composite oxide powder (having an oxide weight ratio of 70/20/10 and a specific surface area of 171 m²/g).

### Preparation Example 6

103.77 g of cerium nitrate (Ce(NO₃)₃·6H₂O) and 40.96 g of terbium nitrate (Tb(NO₃)₃·6H₂O) were dissolved in 1000 ml of ion-exchanged water to prepare an aqueous solution. 0.1.N ammonia water was added to the aqueous solution to neutralize and hydrolyze the cerium salt and terbium salt, and the resulting slurry was aged for one hour. The resulting product was separated from the slurry by filtering, dried at a temperature of 120°C for 24 hours, and then calcined in the air at a temperature of 500°C for three hours to obtain ceria/terbium oxide composite oxide powder (having an oxide weight ratio of 70/30 and a specific surface area of 139 m²/g).

### Preparation Example 7

121.06 g of cerium nitrate (Ce(NO₃)₃·6H₂O), 28.12 g of zirconium oxynitrate (ZrO(NO₃)₂) and 3.40 g of samarium nitrate (Sm(NO₃)₃·6H₂O) were dissolved in 1000 ml of ion-exchanged water to prepare an aqueous solution. 0.1-N ammonia water was added to the aqueous solution to neutralize and hydrolyze the cerium salt, oxyzirconium salt and samarium salt, and the resulting slurry was aged for one hour. The resulting product was separated from the slurry by filtering, dried at a temperature of 120°C for 24 hours, and then calcined in the air at a temperature of 500°C for three hours to obtain ceria/zirconia/samarium oxide composite oxide powder (having an oxide weight ratio of 72/24/4 and a specific surface area of 187 m²/g).

### (2) Preparation of Inner Catalyst Component

### Preparation Example 8

16.8 g of Pt(NH₃)₄(NO₃)₂ aqueous solution (9.0% as platinum) was added to 100 ml of ion-exchanged water to prepare an aqueous solution. 60 g of ceria powder prepared in Preparation Example 1 was added to the solution, followed by drying at 100°C with agitation and calcining at 500°C for three hours in the air to provide a powder catalyst composed of ceria supporting 2% of platinum thereon.

### Preparation Example 9

4.20 g of rhodium nitrate aqueous solution (9.0% as rhodium) and 16.8 g of (Pt(NH₃)₄(NO₃)₂ aqueous solution (9.0% as platinum) were used in place of 16.8 g of (Pt(NH₃)₄(NO₃)₂ aqueous solution (9.0% as platinum), and otherwise in the same manner as Preparation Example 8, a powder catalyst composed of ceria supporting 2% of platinum and 0.5% of rhodium thereon was obtained.

### Preparation Example 10

4.20 g of palladium nitrate aqueous solution (9.0% as palladium) and 8.40 g of (Pt(NH₃)₄(NO₃)₂ aqueous solution (9.0% as platinum) were used in place of 16.8 g of (Pt(NH₃)₄(NO₃)₂ aqueous solution (9.0% as platinum), and otherwise in the same manner as Preparation Example 8, a powder catalyst composed of ceria supporting 2% of platinum and 0.5% of palladium thereon was obtained.

### Preparation Example 11

Ceria/praseodymium oxide composite oxide powder (having an oxide weight ratio of 95/5 and a specific surface area of 182 m²/g) prepared in Preparation Example 2 was used in place of ceria powder prepared in Preparation Example 1, and otherwise in the same manner as Preparation Example 8, a powder catalyst composed of ceria/praseodymium oxide composite oxide supporting 2% of platinum thereon was obtained.

### Preparation Example 12

Ceria/praseodymium oxide/lanthanum oxide composite oxide powder (having an oxide weight ratio of 95/2.5/2.5 and a specific surface area of 180 m²/g) prepared in Preparation Example 3 was used in place of ceria powder prepared in Preparation Example 1, and otherwise in the same manner as Preparation Example 8, a powder catalyst composed of ceria/praseodymium oxide/lanthanum oxide composite oxide supporting 2% of platinum thereon was obtained.

### Preparation Example 13

Ceria/zirconia/gadolinium oxide composite oxide powder (having an oxide weight ratio of 72/24/4 and a specific surface area of 198 m²/g) prepared in Preparation Example 4 was used in place of ceria powder prepared in Preparation Example 1, and otherwise in the same manner as Preparation Example 8, a powder catalyst composed of ceria/zirconia/gadolinium oxide composite oxide supporting 2% of platinum thereon was obtained.

### Preparation Example 14

Ceria/zirconia/neodymium oxide composite oxide powder (having an oxide weight ratio of 70/20/10 and a specific surface area of 171 m²/g) prepared in Preparation Example 5 was used in place of ceria powder prepared in Preparation Example 1, and otherwise in the same manner as Preparation Example 8, a powder catalyst composed of ceria/zirconia/neodymium oxide composite oxide supporting 2% of platinum thereon was obtained.

### Preparation Example 15

Ceria/terbium oxide composite oxide powder (having an oxide weight ratio of 70/30 and a specific surface area of 139 m²/g) prepared in Preparation Example 6 was used in place of ceria powder prepared in Preparation Example 1, and otherwise in the same manner as Preparation Example 8, a powder catalyst composed of ceria/terbium oxide composite oxide supporting 2% of platinum thereon was obtained.

### Preparation Example 16

16.8 g of Pt(NH₃)₄(NO₃)₂ aqueous solution (9.0% as platinum) was added to 100 ml of ion-exchanged water to prepare an aqueous solution. 30 g of y-alumina and 30 g of ceria powder were added to the solution, followed by drying at 100°C with agitation and calcining at 500°C for three hours in the air to provide a powder catalyst composed of y-alumina/ceria (having a weight ratio of 1/1) supporting 2% of platinum thereon.

### Preparation Example 17

10 g of γ-alumina and 50 g of ceria powder were used, and otherwise in the same manner as Preparation Example 16, a powder catalyst composed of γ-alumina/ceria (having a weight ratio of 1/5) supporting 2% of platinum thereon was obtained.

### (3) Preparation of Outer Catalyst Component A

### Preparation Example 18

Ammonia mordenite-10 (available from Zoude Chemical Inc., SiO₂/Al₂O₃ molar ratio=10) was calcined in the air at a temperature of 500°C for three hours to obtain H-mordenite.

### Preparation Example 19

Ammonia β-zeolite-25 (available from Zoude Chemical Inc., SiO₂/Al₂O₃ molar ratio=25) was calcined in the air at a temperature of 500°C for three hours to obtain H-β-zeolite.

### Preparation Example 20

An appropriate amount of water was added to 60 g of metatitanic acid (TiO(OH)₂) obtained from a sulfuric acid process to prepare a slurry. 6.7 g in terms of WO₃ of an aqueous solution of ammonium metatungstate (50 % as WO₃) and 0.67 g in terms of V₂O₅ of an aqueous solution of vanadium oxalate (10 % as V₂O₅) were added to the slurry and then the resulting mixture was evaporated to dryness with agitation. The resulting solid was calcined at a temperature of 500°C for three hours in the air to obtain titanium oxide powder supporting 1% of V₂O₅ and 10 % of WO₃ thereon.

### Preparation Example 21

An appropriate amount of water was added to 60 g of ammonium β-zeolite-25 (available from Zoude Chemical Inc., SiO₂/Al₂O₃ molar ratio=25) to prepare a slurry. 0.62 g in terms of CuO of cupric nitrate was added to the slurry and then the resulting mixture was evaporated to dryness with agitation. The resulting solid was calcined in the air at a temperature of 500°C for three hours to obtain ß-zeolite supporting 1 % of CuO thereon.

### Preparation Example 22

An appropriate amount of water was added to 60 g of ammonium SUZ-4 (available from Nihon Kagaku Kogyo K.K., SiO₂/Al₂O₃ molar ratio=25) to prepare a slurry. 0.62 g in terms of Fe₂O₃ of ferric nitrate was added to the slurry and then the resulting mixture was evaporated to dryness with agitation. The resulting solid was calcined in the air at a temperature of 500°C for three hours to obtain SUZ-4 powder supporting 1 % of Fe₂O₃ thereon.

### (4) Preparation of Honeycomb Catalyst Structure

### Example 1

30 g of the ceria powder catalyst prepared in Preparation Example 8 and supporting 3% of platinum thereon, 12 g of silica sol (SNOWTEX-N, available from Nissan Chemical Industries, Ltd., 20% by weight as silica, the same hereunder) and an appropriate amount of water were mixed together. The resulting mixture was ground with a planetary mill for five minutes by using 100 g of zirconia balls as grinding media to obtain a wash coating slurry. A honeycomb substrate made of cordierite having a cell number of 400 per square inch was coated with the wash coating slurry to obtain a honeycomb catalyst structure supporting the catalyst composed of ceria supporting 3% of platinum thereon at a rate of 150 g per L of volume of the honeycomb as an inner catalyst layer.

Then H-mordenite prepared in Preparation Example 18, 6 g of silica sol and an appropriate amount of water were mixed together. The resulting mixture was ground with a planetary mill for five minutes by using 50 g of zirconia balls as grinding media to obtain a wash coating slurry. The wash coating slurry was applied on the inner catalyst layer of the honeycomb structure to obtain a honeycomb catalyst structure supporting the catalyst comprised of H-mordenite at a rate of 50 g per L of volume of the honeycomb as an outer catalyst layer.

### Example 2

In the same manner as Example 1, a honeycomb catalyst structure was prepared which had an inner catalyst layer having the catalyst prepared in Preparation Example 9 and composed of ceria supporting 2% of platinum and 0.5% of rhodium thereon at a rate of 150 g per L of volume of the honeycomb and an outer catalyst layer having the catalyst prepared in Preparation Example 19 and comprised of H-β-zeolite at a rate of 50 g per L of volume of the honeycomb.

### Example 3

In the same manner as Example 1, a honeycomb catalyst structure was prepared which had an inner catalyst layer having the catalyst prepared in Preparation Example 10 and composed of ceria supporting 2% of platinum and 0.5% of palladium at a rate of 150 g per L of volume of the honeycomb and an outer catalyst layer having the catalyst prepared in Preparation Example 20 and comprised of titanium oxide supporting 1 % of V₂O₅ and 10 % of WO₃ thereon at a rate of 150 g per L of volume of the honeycomb.

### Example 4

60 g of the powder catalyst comprised of y-alumina/ceria (having a weight ratio of 1/1) supporting 2% of platinum thereon, 12 g of silica sol and an appropriate amount of water were mixed together. The resulting mixture was ground with a planetary mill for five minutes by using 100 g of zirconia balls as grinding media to obtain a wash coating slurry. A honeycomb substrate made of cordierite having a cell number of 400 per square inch was coated with the wash coating slurry to obtain a honeycomb catalyst structure supporting the catalyst at a rate of 150 g per L of volume of the honeycomb as an inner catalyst layer.

Then β-zeolite powder supporting 1 % of CuO thereon, 6 g of silica sol and an appropriate amount of water were mixed together. The resulting mixture was ground with a planetary mill for five minutes by using 50 g of zirconia balls as grinding media to obtain a wash coating slurry. The wash coating slurry was applied on the inner catalyst layer of the honeycomb structure to obtain a honeycomb catalyst structure supporting the catalyst composed of β-zeolite supporting 1 % of CuO thereon at a rate of 50 g per L of volume of the honeycomb as an outer catalyst layer.

### Example 5

In the same manner as Example 4, a honeycomb catalyst structure was prepared which had an inner catalyst layer having the catalyst prepared in Preparation Example 17 and composed of Y-alumina/ceria (having a weight ratio of 1/5) supporting 2% of platinum thereon at a rate of 150 g per L of volume of the honeycomb and an outer catalyst layer having the catalyst comprised of β-zeolite supporting 1 % of CuO thereon at a rate of 50 g per L of volume of the honeycomb.

### Example 6

In the same manner as Example 4, a honeycomb catalyst structure was prepared which had an inner catalyst layer having the catalyst prepared in Preparation Example 11 and composed of ceria/praseodymium oxide composite oxide supporting 2% of platinum thereon at a rate of 150 g per L of volume of the honeycomb and an outer catalyst layer having the catalyst prepared in Preparation Example 22 and composed of SUZ-4 supporting 1 % of Fe₂O₃ thereon at a rate of 50 g per L of volume of the honeycomb.

### Example 7

In the same manner as Example 4, a honeycomb catalyst structure was prepared which had an inner catalyst layer having the catalyst prepared in Preparation Example 12 and composed of ceria/praseodymium oxide/lanthanum oxide composite oxide supporting 2% of platinum thereon at a rate of 150 g per L of volume of the honeycomb and an outer catalyst layer having the catalyst prepared in Preparation Example 22 and composed of SUZ-4 supporting 1 % of Fe₂O₃ thereon at a rate of 50 g per L of volume of the honeycomb.

### Example 8

In the same manner as Example 4, a honeycomb catalyst structure was prepared which had an inner catalyst layer having the catalyst prepared in Preparation Example 13 and composed of ceria/zirconia/gadolinium oxide composite oxide supporting 2% of platinum thereon at a rate of 150 g per L of volume of the honeycomb and an outer catalyst layer having the catalyst prepared in Preparation Example 22 and composed of SUZ-4 supporting 1 % of Fe₂O₃ thereon at a rate of 50 g per L of volume of the honeycomb.

### Example 9

In the same manner as Example 4, a honeycomb catalyst structure was prepared which had an inner catalyst layer having the catalyst prepared in Preparation Example 14 and composed of Yceria/zirconia/neodymium oxide composite oxide supporting 2% of platinum thereon at a rate of 150 g per L of volume of the honeycomb and an outer catalyst layer having the catalyst prepared in Preparation Example 22 and composed of SUZ-4 supporting 1 % of Fe₂O₃ thereon at a rate of 50 g per L of volume of the honeycomb.

### Example 10

In the same manner as Example 4, a honeycomb catalyst structure was prepared which had an inner catalyst layer having the catalyst prepared in Preparation Example 15 and composed of ceria/terbium oxide composite oxide supporting 2% of platinum thereon at a rate of 150 g per L of volume of the honeycomb and an outer catalyst layer having the catalyst prepared in Preparation Example 22 and composed of SUZ-4 supporting 1 % of Fe₂O₃ thereon at a rate of 50 g per L of volume of the honeycomb.

### Comparative Example 1

8.40 g of Pt(NH₃)₄(NO₃)₂ aqueous solution (9.0% as platinum) was added to 100 ml of ion-exchanged water to prepare an aqueous solution. 60 g of γ-alumina was added to the solution, followed by drying at 100°C with agitation and calcining at 500°C for three hours in the air to provide a powder catalyst composed of Y-alumina supporting 1% of platinum thereon.

Then, in the same manner as Example 1, a honeycomb catalyst structure was prepared which had an inner catalyst layer having the catalyst composed of Y-alumina supporting 1% of platinum thereon at a rate of 50 g per L of volume of the honeycomb and an outer catalyst layer having the catalyst prepared in Preparation Example 12 and composed of ceria/praseodymium oxide/lanthanum oxide composite oxide supporting 2% of platinum thereon at a rate of 100 g per L of volume of the honeycomb.

### Comparative Example 2

8.40 g of Pt(NH₃)₄(NO₃)₂ aqueous solution (9.0% as platinum) was added to 100 ml of ion-exchanged water to prepare an aqueous solution. 60 g of γ-alumina was added to the solution, followed by drying at 100°C with agitation and calcining at 500°C for three hours in the air to provide a powder catalyst comprised of Y-alumina supporting 1% of platinum thereon.

151.37 g of cerium nitrate (Ce(NO₃)₃·6H₂O) was dissolved in 1000 ml of ion-exchanged water to prepare an aqueous solution. 0.1-N ammonia water was added to the aqueous solution to neutralize and hydrolyze the cerium ions, and the resulting slurry was aged for one hour. The product was separated from the slurry by filtering, dried at a temperature of 120°C for 24 hours, and then calcined in the air at a temperature of 500°C for three hours to obtain ceria powder (having a specific surface area of 138 m²/g).

4.20 g of rhodium nitrate aqueous solution (9.0% as rhodium) was added to 100 ml of ion-exchanged water to prepare an aqueous solution. 30 g of the ceria powder was added to the aqueous solution, followed by drying at 100°C with agitation and calcining at 500°C for three hours in the air to provide a powder catalyst comprised of ceria supporting 1% of rhodium thereon.

Then, in the same manner as Example 1, a honeycomb catalyst structure was prepared which had an inner catalyst layer having the catalyst composed of γ-alumina supporting 1% of platinum thereon at a rate of 50 g per L of volume of the honeycomb and an outer catalyst layer having the catalyst composed of ceria supporting 1% of rhodium thereon at a rate of 100 g per L of volume of the honeycomb.

### Comparative Example 3

Barium carbonate was prepared by using aqueous solutions of barium hydroxide and sodium carbonate. The barium carbonate (BaCO₃) and y-alumina were mixed together in a weight ratio of 8 to 2, and 1% of platinum was supported on the mixture to prepare a catalyst powder.

y-Alumina was added to an aqueous solution of potassium carbonate, and the resulting mixture was dried and calcined at 1100°C for three hours in the air to provide K₂O·12Al₂O₃ (having a specific surface area of 18 m²/g). Furthermore, y-alumina was mixed with K₂O·12Al₂O₃ prepared above in a weight ratio of 9 to 1 to prepare a mixture of y-alumina/K₂O·12Al₂O₃ and 1% of platinum was supported on the mixture thereby providing a catalyst powder.

48 g of the above-mentioned catalyst powder composed of BaCO₃/y-alumina supporting 1% of platinum thereon and 12 g of the catalyst powder composed of y-alumina/K₂O·12Al₂O₃ supporting 1% of platinum thereon prepared above were dry mixed, and using this mixture, a wash coating slurry was prepared in the same manner as Example 1. The slurry was then coated on the same cordierite honeycomb substrate as used in Example 1 in the same manner as Example 1 thereby providing a honeycomb catalyst structure having a layer of the catalyst at a rate of 100 g per L of volume of the honeycomb.

### (5) Performance test

A nitrogen oxide-containing gas was treated under the conditions below by using each of the catalysts prepared in Examples and Comparative Examples. The NOx conversion (removal) was measured by a chemical luminescence method.

### Testing method

The composition of the gas mixture used in the reduction experiment of NOx under the rich conditions was as follows:
NO: 100 ppm
SO₂:50 ppm
O₂: 0.4 ppm
CO: 2%
C₃H₆ (propylene): 2000 ppm
H₂: 2%
H₂O: 9.0%

The gas used under the lean conditions was prepared by injecting oxygen into the gas mixture used under the rich conditions, and the composition thereof was as follows:
NO: 100 ppm
SO₂: 50 ppm
O₂: 9.0%
CO: 0.2%
C₃H₆ (propylene): 500 ppm
H₂: 0%
H₂O: 6.0%

The catalyst reaction was carried out with the rich time (s)/lean time (s) in the range of 3 (s)/30 (s) to 12 (s)/120 (s) to examine the performance of each of the catalysts.
(i) Space velocity:
   50000 h⁻¹ (under the lean conditions)
   500000 h⁻¹ (under the rich conditions)
(ii) Reaction temperature:
   200, 250, 300, 350 and 400°C

As the results are shown in Table 1, the catalysts of the invention have high conversion rate of nitrogen oxides, whereas the catalysts of Comparative Examples have on the whole a low conversion rate of nitrogen oxides.

**Table 1**

| | NOx Conversion (%) | | | | |
|---|---|---|---|---|---|
| | Temperature (°C) | | | | |
| | 200 | 250 | 300 | 350 | 400 |
| Example 1 | 83.2 | 91.9 | 93.4 | 94.3 | 50.0 |
| Example 1 | 76.2 | 90.5 | 91.3 | 87.2 | 41.6 |
| Example 1 | 64.5 | 73.2 | 93.6 | 92.6 | 81.2 |
| Example 1 | 77.3 | 92.3 | 93.5 | 93.2 | 88.6 |
| Example 1 | 82.4 | 94.2 | 95.1 | 92.8 | 82.2 |
| Example 1 | 81.5 | 94.0 | 95.7 | 94.5 | 89.3 |
| Example 1 | 87.5 | 94.3 | 95.7 | 93.7 | 83.4 |
| Example 1 | 76.6 | 88.5 | 90.3 | 86.5 | 57.9 |
| Example 1 | 71.4 | 88.4 | 91.5 | 90.6 | 66.4 |
| Example 1 | 63.1 | 76.9 | 89.5 | 91.7 | 86.0 |
| Comparative 1 | 75.8 | 88.1 | 89.2 | 84.8 | 39.5 |
| Comparative 2 | 52.2 | 83.9 | 82.3 | 79.2 | 32.4 |
| Comparative 3 | 17.3 | 65.1 | 86.0 | 95.5 | 96.3 |

### (6) Test for Confirming the Generation of Nitrogen

(i) Preparation of catalyst layer using a catalyst of the invention
   1mL of the honeycomb catalyst prepared in Example 1 was filled in a reaction tube made of quartz, and was used in the reaction mentioned below.
(ii) Preparation of catalyst layer using a catalyst prepared in a comparative example
   1mL of the honeycomb catalyst prepared in Comparative Example 1 was filled in a reaction tube made of quartz, and was used in the reaction mentioned below.
(iii) Reaction test
   Using each of the catalysts mentioned above, a test was carried out to confirm the generation of nitrogen by treating the above-mentioned test gas under the conditions described below. The test gas treated under the lean conditions was composed of 2000 ppm of NO, 9% by volume of oxygen and the balance of helium. The test gas treated under the rich conditions was prepared by injecting 5% by volume of hydrogen into the test gas treated under the lean conditions periodically. The gas was forced to pass the catalyst layer with a rich time (s)/lean time (s) of 5 (s)/60 (s) and the gas after the reaction was subject to measurement of nitrogen and NOx by using a quadrupole mass spectrometer (OMNISTAR, manufactured by Balzer Inc.).

Fig. 1 shows the results obtained when the test gas was treated with the catalyst layer formed of the catalyst of the invention. It was confirmed that nitrogen was generated under the lean conditions over a temperature range of 250 to 400°C. This means that ammonia generated on the catalyst was adsorbed onto a solid acid component in the catalyst under the rich conditions and the thus adsorbed ammonia reduces NOx selectively to nitrogen only under the lean conditions.

In contrast, as Fig. 2 shows the results obtained when the test gas was treated with the catalyst layer formed of the catalyst of Comparative Example, it was confirmed that nitrogen was generated only immediately after the test gas atmosphere was changed from the lean conditions to the rich conditions over a temperature range of 250 to 400°C. This means that the NO₂ absorbed in an alkaline compound (NOx absorber) is reduced under the rich conditions only with a reducing agent present in the gas.

## Claims

1. A catalyst for catalytic reduction of nitrogen oxides contained in exhaust gas wherein fuel is supplied and subjected to combustion under periodic rich/lean conditions and the resulting exhaust gas is brought into contact therewith, which catalyst comprises:
(A) an outer catalyst layer comprising an outer catalyst component A which comprises at least one selected from
(a) a solid acid, and
(b) a solid acid supporting oxides and/or ions of at least one element selected from vanadium, tungsten, molybdenum, copper, iron, cobalt, nickel and manganese, and
an inner catalyst layer comprising an inner catalyst component which comprises
(B) at least one noble metal catalyst component B selected from platinum, rhodium, palladium and an oxide thereof, and
(C) a catalyst component C comprising
(c) ceria or
(d) praseodymium oxide or
(e) a mixture of oxides and/or a composite oxide of at least two elements selected from cerium, zirconium, praseodymium, neodymium, terbium, samarium, gadolinium and lanthanum.

2. A catalyst as claimed in claim 1 wherein the inner catalyst component comprises the catalyst component B supported on the catalyst component C.

3. A catalyst as claimed in claim 1 wherein the inner catalyst component comprises the catalyst component B supported on both the catalyst component C and a carrier.

4. A catalyst structure for catalytic reduction of nitrogen oxides contained in exhaust gases wherein fuel is supplied and subjected to combustion under periodic rich/lean conditions and the resulting exhaust gases are brought into contact therewith, in which the catalyst structure comprises an inactive substrate and the catalyst as claimed in any one of claims 1 to 3.

5. A method for catalytic reduction of nitrogen oxides contained in exhaust gas wherein fuel is supplied and subjected to combustion under periodic rich/lean conditions and the resulting exhaust gas is brought into contact a catalyst, which catalyst comprises:
(A) an outer catalyst layer comprising an outer catalyst component A which comprises at least one selected from
(a) a solid acid, and
(b) a solid acid supporting oxides and/or ions of at least one element selected from vanadium, tungsten, molybdenum, copper, iron, cobalt, nickel and manganese, and
an inner catalyst layer comprising an inner catalyst component which comprises
(B) at least one noble metal catalyst component B selected from platinum, rhodium, palladium and an oxide thereof, and
(C) a catalyst component C comprising
(c) ceria or
(d) praseodymium oxide or
(e) a mixture of oxides and/or a composite oxide of at least two elements selected from cerium, zirconium, praseodymium, neodymium, terbium, samarium, gadolinium and lanthanum.

6. A method as claimed in claim 5 wherein the inner catalyst component comprises the catalyst component B supported on the catalyst component C.

7. A method as claimed in claim 5 wherein the inner catalyst component comprises the catalyst component B supported on both the catalyst component C and a carrier.
